(19) Europäisches Patentamt / European Patent Office / Office européen des brevets

(11) **EP 1 991 847 B1**

(12) **FASCICULE DE BREVET EUROPEEN**

(45) Date de publication et mention
de la délivrance du brevet:
**22.06.2016 Bulletin 2016/25**

(21) Numéro de dépôt: **07731552.1**

(22) Date de dépôt: **01.02.2007**

(51) Int Cl.:
***G01K 13/02*** *(2006.01)*

(86) Numéro de dépôt international:
**PCT/FR2007/050724**

(87) Numéro de publication internationale:
**WO 2007/093722 (23.08.2007 Gazette 2007/34)**

(54) **PROCEDE DE DETERMINATION DE LA TEMPERATURE TOTALE**

VERFAHREN ZUR BESTIMMUNG DER GESAMTTEMPERATUR

METHOD FOR DETERMINING THE TOTAL TEMPERATURE

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **14.02.2006 FR 0650531**

(43) Date de publication de la demande:
**19.11.2008 Bulletin 2008/47**

(73) Titulaire: **AIRBUS OPERATIONS (S.A.S)
31060 Toulouse (FR)**

(72) Inventeurs:
• **BRIVET, Valérie
F-31490 Leguevin (FR)**
• **GAUCHERON, Philippe
F-31470 Fontenilles (FR)**
• **SAINT-AROMAN, Stéphane
F-31200 Toulouse (FR)**

(74) Mandataire: **Gicquel, Olivier Yves Gérard et al
Airbus Opérations (S.A.S.)
Intellectual Property Department
316, route de Bayonne
ETRT - M0101/1
31060 Toulouse Cedex 9 (FR)**

(56) Documents cités:
**EP-A- 1 586 877      EP-A- 1 602 905
EP-A2- 1 275 947**

EP 1 991 847 B1

**Description**

*Domaine de l'invention*

L'invention concerne un procédé pour déterminer la température totale du flux d'air environnant un aéronef, en particulier lorsque l'aéronef est au sol. La détermination de la température totale, selon le procédé de l'invention, prend en compte des valeurs mesurées de la température statique et des valeurs mesurées de la température totale.
L'invention trouve des applications dans le domaine de l'aéronautique, et, en particulier, dans le domaine de la mesure de paramètres tels que les paramètres de température extérieure à l'aéronef.

*Etat de la technique*

A bord d'un aéronef, il est important de connaître certaines informations relatives au vol de l'aéronef et, notamment, la température extérieure à l'aéronef. La température extérieure à l'aéronef est mesurée au moyen de sondes dédiées ou des sondes multifonctions placées dans la structure externe de l'aéronef. La température extérieure de l'aéronef est donnée, généralement, par la température totale et par la température statique. La température totale est la température du flux d'air autour de l'aéronef en présence d'un écoulement d'air agissant sur la valeur de la température. La température statique est la température du flux d'air environnant l'aéronef dans des conditions telles que l'écoulement de l'air n'ait aucune influence sur sa valeur.
Classiquement, la température totale est mesurée par une ou plusieurs sonde(s) située(s) dans l'écoulement de l'air et la température statique de l'air est calculée à partir des valeurs mesurées de la température totale. Les sondes pour mesurer la température totale sont, généralement, soit des sondes autonomes, dédiées à la mesure de température, soit des sondes associées à d'autres capteurs pour former des sondes multifonctions. Quelles soient autonomes ou multifonctions, les sondes sont installées à bord de l'aéronef, en extérieur de l'aéronef, dans un environnement soumis à l'écoulement de l'air.
Du fait de la température extrêmement froide de l'air, notamment en vol, les sondes sont généralement réchauffées pour éviter qu'elles ne givrent. En particulier, dans le cas de sondes multifonctions, un dégivrage est mis en oeuvre automatiquement dès la mise en route du moteur. Cependant, le réchauffage des sondes entraîne nécessairement une émission de chaleur. Cette chaleur peut perturber les mesures par la sonde, dans certaines conditions.
Plus précisément, lorsque l'aéronef est en vol, le flux d'air s'écoulant autour de la sonde permet de dissiper la chaleur de dégivrage. L'effet du dégivrage, c'est-à-dire le réchauffement de la sonde, est alors caractérisable et, par conséquent, corrigeable. Dans ce cas, la sonde fournit une température totale précise et cohérente. Par contre, lorsque l'aéronef est au sol, il n'y a pas, ou peu, de flux d'air circulant autour de l'aéronef. La chaleur de réchauffage de la sonde ne peut donc être évacuée. Cette chaleur de réchauffage est donc prise en compte par la sonde et la mesure de température totale se trouve faussée.
Pour résoudre ce problème, il est possible de ne dégivrer la sonde de température totale qu'au-delà d'une certaine vitesse du flux d'air. La sonde ne serait donc pas dégivrée tant que l'aéronef est au sol. Cependant, dans ce cas, les mesures de la température totale au sol seraient dépendantes des conditions météorologiques. En effet, en cas de neige ou de froid intense, la sonde risquerait de givrer lorsque l'aéronef est au sol et les valeurs mesurées par la sonde seraient erronées. En outre, la sonde serait également soumise aux écarts de température directement liés à une exposition au soleil. Or, les écarts de température dus aux conditions climatiques ne sont pas caractérisables, donc pas corrigeables.
Ainsi, quelles que soient les conditions de dégivrage choisies (dégivrage de la sonde uniquement hors sol ou dégivrage de la sonde permanent), les techniques de mesure actuelles ne permettent pas d'assurer une mesure fiable de la température totale au sol.
Le document EP-A2-1 275 947 décrit une méthode de calcul d'une température totale visant à réduire les erreurs dues à un dispositif de dégivrage d'une sonde de température totale. Selon cette méthode, la température totale est calculée en fonction de la température totale mesurée, corrigée en fonction d'une mesure d'angle d'incidence de la sonde de température totale.

*Exposé de l'invention*

L'invention a justement pour but de remédier aux inconvénients des techniques exposées précédemment. A cette fin, l'invention propose un procédé permettant de corriger la valeur mesurée de la température totale, en particulier lorsque l'aéronef est au sol ou que sa vitesse est trop faible pour créer un flux d'air suffisant pour permettre la dissipation de la chaleur de réchauffage de la sonde. Pour cela, l'invention propose de mesurer la température statique et de corriger la mesure de la température totale au moyen d'une loi de convergence utilisant les valeurs mesurées des températures statique et totale, en fonction de la vitesse de l'air.

De façon plus précise, l'invention concerne un procédé de détermination de la température totale du flux d'air environnant un aéronef, caractérisé en ce qu'il comporte les opérations suivantes :

- mesure d'une température statique,
- mesure d'une température totale,
- détermination d'une valeur de vitesse du flux d'air,
- détermination d'une température totale calculée à partir de la température statique mesurée et de la température totale mesurée, en fonction de la vitesse du flux d'air.

L'invention peut comporter une ou plusieurs des caractéristiques suivantes :

- la température totale calculée correspond à la température totale mesurée ou la température statique mesurée, éventuellement corrigée suivant une loi de convergence.
- la loi de convergence diffère en fonction de la vitesse de l'air.
- à faible vitesse, la température totale calculée correspond à la température statique mesurée.
- à grande vitesse, la température totale calculée correspond à la température totale mesurée.
- à vitesse intermédiaire, la température totale calculée est corrigée par un écart entre la température totale mesurée et la température statique mesurée à un instant donné.
- en phase d'accélération de l'aéronef, la température totale calculée est $TAT_{calculée}(t) = TAT_{mesurée}(t) - \Delta T_{vo} * (V1-CAS(t))/(V1-V0)$, où $\Delta Tvo = TAT_{mesurée}(t_{vo}) - TAT_{calculée}(t_{vo})$.
- en phase de décélération de l'aéronef, la température totale calculée est $TAT_{calculée}(t) = SAT_{mesurée}(t) - \Delta T_{v2} * (t-t_{v2})/T_{convergence}$, où $\Delta T_{v2} = SAT_{mesurée}(t_{v2}) - TAT_{calculée}(T_{v2})$.

L'invention concerne également un aéronef comportant un système mettant en oeuvre le procédé décrit précédemment.

*Brève description des dessins*

La figure 1 représente des exemples de courbes montrant l'évolution de l'erreur de mesure de la température totale en fonction de la vitesse de l'air.
La figure 2 représente un tableau récapitulatif des lois de convergence à appliquer en fonction de la vitesse de l'air et de la phase de vol de l'aéronef.

*Description détaillée de modes de réalisation de l'invention*

L'invention concerne un procédé pour déterminer la température totale du flux d'air environnant un aéronef quelles que soient les conditions météorologiques et la vitesse de l'aéronef. Ce procédé permet, en particulier, de calculer la température totale du flux d'air environnant l'aéronef lorsque celui-ci est au sol.
Ce procédé de détermination de la température totale comporte les opérations de mesure de la température totale et de mesure de la température statique. La température totale est un paramètre mesuré au moyen d'une sonde dédiée à la mesure de température totale ou d'une sonde multifonctions. La température statique est un paramètre mesuré au moyen d'une sonde de température statique, dédiée ou multifonctions. La mesure de température totale est corrigée par la mesure de température statique suivant une loi de convergence qui diffère en fonction de la vitesse de l'air. Autrement dit, selon l'invention, la température totale est calculée à partir des valeurs mesurées des températures totale et statique, en fonction de la vitesse de l'air. Le paramètre de température totale calculée est déterminé par l'ordinateur de bord de l'aéronef et, plus précisément, par le calculateur ADIRU. La vitesse de l'air est un paramètre connu de ce calculateur.
Le procédé de l'invention prend en compte le fait que, à faible vitesse, la température totale est proche de la température statique. Il est donc possible, à faible vitesse, de considérer que la température totale est équivalente à la température statique. Ainsi, au sol, lorsque l'air est de faible vitesse, on choisit d'approximer la valeur de la température totale calculée par la valeur de la température statique mesurée par la sonde.
Au contraire, à grande vitesse, on considère que le flux d'air est suffisant pour dissiper les effets du dégivrage. On choisit alors d'approximer la valeur de la température totale calculée par la valeur de la température totale mesurée par la sonde de température totale.
A vitesse intermédiaire, c'est-à-dire à une vitesse trop faible pour assurer l'existence d'un flux d'air dissipateur de chaleur et suffisamment élevée pour que l'écoulement d'air ait un effet sur la température totale, le procédé de l'invention propose de calculer la valeur de la température totale à partir d'au moins une loi de convergence. Le procédé de l'invention propose ainsi de réaliser une transition entre l'approximation par la mesure de température statique et la prise en compte directe de la mesure de température totale. Cette transition consiste en l'application d'au moins une loi de convergence.

La loi à appliquer, à savoir l'approximation par la mesure de température statique, la prise en compte directe de la mesure de température totale ou la loi de convergence, est choisie en fonction de la vitesse de l'air par rapport à des vitesses fixes prédéfinies, appelées vitesses de transition.

Dans un mode de réalisation préféré de l'invention, la température totale est calculée à partir de plusieurs lois de convergence, la loi appliquée étant fonction de la vitesse de l'air et de la phase de vol de l'aéronef. En effet, au sol, l'aéronef peut être à l'arrêt ou bien en phase de décollage ou encore en phase d'atterrissage. En phase de décollage, l'aéronef accélère. En phase d'atterrissage, l'aéronef décélère. Selon que l'aéronef accélère ou décélère, les vitesses de transition entre une loi de convergence et une autre loi peuvent varier.

Plus précisément, le procédé de l'invention prend en compte au moins deux vitesses de transition, à savoir une vitesse basse et une vitesse haute. La vitesse de transition basse correspond au point de passage entre une loi appliquée à faible vitesse et une loi appliquée à vitesse intermédiaire. La vitesse de transition haute correspond au point de passage entre la loi appliquée à vitesse intermédiaire et une loi appliquée à grande vitesse.

En dessous de la valeur de transition basse, la température statique est suffisamment précise pour que la température totale calculée soit approximée à la température statique mesurée. Au-delà de la vitesse de transition haute, le flux d'air est suffisant pour dissiper la chaleur du dégivrage ; la température totale calculée peut donc être approximée par la valeur de la température totale mesurée. Au passage de la vitesse de transition basse, la mesure de la température statique est toujours suffisamment précise ; il suffit alors de calculer l'écart entre la température statique mesurée et la température totale mesurée pour connaître l'amplitude de la correction à effectuer.

La valeur des vitesses de transition basse et haute peut varier en fonction de l'aéronef et de la phase de vol dans laquelle se trouve l'aéronef à l'instant considéré. En particulier, en phase de décollage, c'est-à-dire lorsque l'aéronef est dans une phase d'accélération, la vitesse basse choisie est V0 et la vitesse haute V1. En phase d'atterrissage, c'est-à-dire lorsque l'aéronef est en phase de décélération, la vitesse de transition est la vitesse V2.

Entre ces vitesses de transition V0, V2 et V1, qui sont des vitesses d'écoulement de l'air par rapport à l'avion, on établit une loi de convergence qui permet de passer, avec une transition douce, de l'approximation par la valeur de la température statique mesurée vers l'approximation par la valeur de la température totale mesurée. En effet, pour des raisons de cohérence, il n'est pas possible de passer d'une approximation à une autre sans transition. La loi de convergence établie dans l'invention assure cette transition.

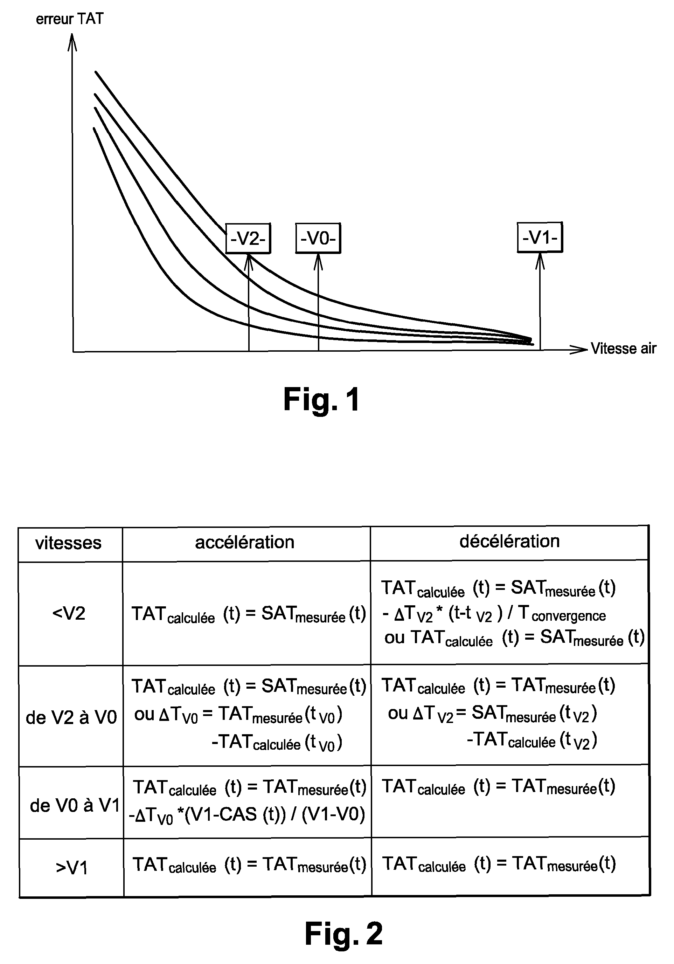

La figure 1 représente des exemples de courbes montrant la convergence de l'erreur de température totale, appelée erreur TAT, en fonction de la vitesse de l'air. Ces courbes montrent qu'en dessous de la vitesse de transition basse V0 ou V2, l'erreur de température totale est très importante et que, par conséquent, il n'est pas possible de prendre comme valeur de température totale la valeur TAT mesurée. Elles montrent aussi que plus la vitesse de l'air se rapproche de la vitesse de transition haute V1, plus l'erreur de TAT converge vers 0. A partir de V1, il est donc possible d'approximer la température totale par la valeur de température totale mesurée. Entre la vitesse de transition basse V0 ou V2, l'invention propose de mesurer l'écart entre la température totale mesurée et la température statique mesurée à une vitesse donnée et de faire converger cet écart suivant une courbe de sorte que, à proximité de la vitesse de transition haute V1, cet écart soit nul. La convergence peut être réalisée en fonction de la vitesse de l'air ou bien en fonction du temps afin de tenir compte de l'inertie éventuelle dans la zone où est installée la sonde de température statique.

Ainsi, l'erreur de température totale peut être estimée, en fonction du temps t, de la façon suivante, suivant que l'aéronef est en phase d'accélération ou en phase de décélération :

*En phase d'accélération :*

Lorsque la vitesse de l'air est inférieure à la vitesse de transition basse V0, alors la température totale calculée correspond à la valeur de la température statique mesurée. On a donc :

$$\text{TAT}_{\text{calculée}}(t) = \text{SAT}_{\text{mesurée}}(t),$$

Où $\text{TAT}_{\text{calculée}}(t)$ est la température totale calculée à l'instant t et $\text{SAT}_{\text{mesurée}}(t)$ est la température statique mesurée à l'instant t.

Au moment du passage de la vitesse de transition V0, on peut déterminer l'écart $\Delta\text{Tvo}$ entre la température totale mesurée et la température totale calculée à partir de la température statique de la façon suivante :

$$\Delta T vo = TAT_{\text{mesurée}}(t_{vo}) - TAT_{\text{calculée}}(t_{vo}),$$

Où $TAT_{\text{mesurée}}(t_{vo})$ est la température totale mesurée à l'instant du passage de la vitesse V0.

Ainsi, au passage de la vitesse de transition V0, on peut déterminer l'écart entre la température totale mesurée et la température totale calculée. Cet écart correspond à la différence entre la température totale mesurée et la température statique mesurée.

Pour des vitesses comprises entre la vitesse de transition basse V0 et la vitesse de transition haute V1, la température totale calculée est déterminée à partir de la température totale mesurée corrigée de l'écart $\Delta T_{vo}$ et de la vitesse de l'air. La température totale calculée est alors :

$$TAT_{\text{calculée}}(t) = TAT_{\text{mesurée}}(t) - \Delta T_{vo} * (V1-CAS(t))/(V1-V0),$$

où CAS(t) est la vitesse de l'aéronef (Computer Air Speed) donnée en noeuds par le calculateur de l'aéronef.

Lorsque la vitesse atteint et dépasse la vitesse de transition haute V1, alors la température totale calculée correspond à la température totale mesurée. On a donc :

$$TAT_{\text{calculée}}(t) = TAT_{\text{mesurée}}(t)$$

*En phase de décélération :*

Lorsque la vitesse est supérieure à la vitesse de transition haute V1, alors la température totale calculée correspond à la valeur de la température totale mesurée. On a donc :

$$TAT_{\text{calculée}}(t) = TAT_{\text{mesurée}}(t).$$

Au passage de la vitesse de transition basse V2, on peut déterminer l'écart $\Delta T_{v2}$ entre la température totale calculée et la température statique mesurée de la façon suivante :

$$\Delta T_{v2} = SAT_{\text{mesurée}}(t_{v2}) - TAT_{\text{calculée}}(t_{v2}),$$

Où $SAT_{\text{mesurée}}(t_{v2})$ est la température statique mesurée à l'instant de passage de la vitesse V2 et $TAT_{\text{calculée}}(t_{v2})$ est la température totale calculée à ce même instant.

Cet écart $\Delta T_{v2}$ correspond donc à la différence entre la température statique mesurée et la température totale mesurée.

En dessous de la vitesse de transition V2, la température totale calculée est déterminée à partir de la température statique mesurée, corrigée de l'écart $\Delta T_{v2}$ de la façon suivante :

$$TAT_{\text{calculée}}(t) = SAT_{\text{mesurée}}(t) - \Delta T_{v2} * (t - t_{v2}) / T_{\text{convergence}},$$

où $T_{\text{convergence}}$ est la durée de convergence vers la température statique. Si l'accélération suivante se produit alors que la convergence vers la température statique n'est pas terminée, alors la température totale calculée reste déterminée à partir de cette formule. Au-delà de la durée de convergence, la température totale calculée est basée sur la température statique mesurée, soit :

$$TAT_{\text{calculée}}(t) = SAT_{\text{mesurée}}(t) .$$

Un tableau récapitulatif des différentes loi de convergence est représenté sur la figure 2. Ce tableau montre les lois applicables en fonction de la phase de vol de l'aéronef (accélération et décélération) et de la vitesse de l'air.

Les vitesses de transition V0, V1 et V2 sont des valeurs fixes déterminées en fonction de l'aéronef et en fonction des éléments climatiques. Par exemple, la vitesse de transition V0 peut être de 70 noeuds et la vitesse de transition V1 de 100 noeuds.

Le choix des valeurs de transition doit prendre en compte un élément particulier de la phase d'accélération de l'aéronef, à savoir le cas où l'aéronef est en phase d'accélération mais qu'il n'a pas encore atteint la vitesse de décision, à partir de laquelle il ne peut plus freiner et est obligé de décoller. Dans ce cas, l'aéronef peut se trouver à la fois dans la situation d'une phase d'accélération et d'une phase de décélération, notamment si le pilote choisit de freiner parce qu'il n'a pas encore atteint cette vitesse de décision. Il est important, dans ce cas, que la vitesse de transition V2 soit choisie de sorte qu'il soit possible de changer de façon de déterminer la température totale calculée. Il convient alors de choisir la vitesse de transition V2 inférieure à la vitesse de transition V0.

Dans le mode de réalisation préféré de l'invention, les vitesses de transition haute et basse correspondent à des vitesses de l'air obtenues lorsque l'aéronef est encore au sol. L'application du procédé de l'invention est particulièrement intéressante lorsque l'aéronef est au sol, pour les raisons de dégivrage des sondes évoquées précédemment. Il est noter, toutefois, que ce procédé peut être appliqué également lorsque l'aéronef est en vol.

**Revendications**

1. Procédé de détermination de la température totale du flux d'air environnant un aéronef, **caractérisé en ce qu'**il comporte les opérations suivantes :

    - mesure d'une température statique,
    - mesure d'une température totale,
    - détermination d'une valeur de vitesse du flux d'air,
    - détermination d'une température totale calculée à partir de la température statique mesurée et de la température totale mesurée, en fonction de la vitesse du flux d'air.

2. Procédé selon la revendication 1, **caractérisé en ce que** la température totale calculée correspond à l'une des valeurs suivantes, en fonction de la vitesse du flux d'air :

    - la température totale mesurée,
    - la température statique mesurée, ou
    - la température totale mesurée ou la température statique mesurée, corrigée suivant une loi de convergence.

3. Procédé selon la revendication 2, **caractérisé en ce que** la loi de convergence diffère en fonction de la vitesse de l'air.

4. Procédé selon la revendication 2 ou 3, **caractérisé en ce que**, à faible vitesse, la température totale calculée correspond à la température statique mesurée.

5. Procédé selon l'une quelconque des revendications 2 à 4, **caractérisé en ce que**, à grande vitesse, la température totale calculée correspond à la température totale mesurée.

6. Procédé selon l'une quelconque des revendications 2 à 5, **caractérisé en ce que**, à vitesse intermédiaire, la température totale calculée est corrigée par un écart entre la température totale mesurée et la température statique mesurée à un instant donné.

7. Procédé selon la revendication 6, **caractérisé en ce que**, en phase d'accélération de l'aéronef, la température totale calculée est $TAT_{calculée}(t) = TAT_{mesurée}(t) - \Delta T_{vo} * (V1-CAS(t))/(V1-V0)$, où $\Delta T_{vo} = TAT_{mesurée}(t_{vo}) - TAT_{calculée}(t_{vo})$.

8. Procédé selon la revendication 6 ou 7, **caractérisé en ce que**, en phase de décélération de l'aéronef, la température totale calculée est $TAT_{calculée}(t) = SAT_{mesurée}(t) - \Delta T_{v2} *(t-t_{V2})/T_{convergence}$, où $\Delta T_{v2} = SAT_{mesurée}(t_{v2}) - TAT_{calculée}(T_{V2})$.

9. Aéronef, **caractérisé en ce qu'**il comporte un système mettant en oeuvre le procédé selon l'une quelconque des revendications précédentes.

**Patentansprüche**

1. Verfahren zur Bestimmung der Gesamttemperatur der ein Luftfahrzeug umgebenden Luftströmung, **dadurch ge-**

**kennzeichnet, dass** es die folgenden Vorgänge aufweist:

- Messen einer statischen Temperatur,
- Messen einer Gesamttemperatur,
- Bestimmen eines Geschwindigkeitswerts der Luftströmung,
- Bestimmen einer Gesamttemperatur berechnet ausgehend von der gemessenen statischen Temperatur und von der gemessenen Gesamttemperatur, abhängig von der Geschwindigkeit der Luftströmung.

2. Verfahren nach Anspruch 1, **dadurch gekennzeichnet, dass** die berechnete Gesamttemperatur einem der folgenden Werte entspricht, abhängig von der Geschwindigkeit der Luftströmung:

- der gemessenen Gesamttemperatur,
- der gemessenen statischen Temperatur, oder
- der gemessenen Gesamttemperatur oder der gemessenen statischen Temperatur, korrigiert gemäß einem Konvergenzgesetz.

3. Verfahren nach Anspruch 2, **dadurch gekennzeichnet, dass** das Konvergenzgesetz abhängig von der Luftgeschwindigkeit unterschiedlich ist.

4. Verfahren nach Anspruch 2 oder 3, **dadurch gekennzeichnet, dass** bei geringer Geschwindigkeit die berechnete Gesamttemperatur der gemessenen statischen Temperatur entspricht.

5. Verfahren nach einem der Ansprüche 2 bis 4, **dadurch gekennzeichnet, dass** bei großer Geschwindigkeit die berechnete Gesamttemperatur der gemessenen Gesamttemperatur entspricht.

6. Verfahren nach einem der Ansprüche 2 bis 5, **dadurch gekennzeichnet, dass** bei Zwischengeschwindigkeit die berechnete Gesamttemperatur durch eine Abweichung zwischen der gemessenen Gesamttemperatur und der gemessenen statischen Temperatur zu einem gegebenen Zeitpunkt korrigiert wird.

7. Verfahren nach Anspruch 6, **dadurch gekennzeichnet, dass** in der Beschleunigungsphase des Luftfahrzeugs die berechnete Gesamttemperatur beträgt $TAT_{berechnet}(t) = TAT_{gemessen}(t) - \Delta T_{V0} * (V1-CAS(t))/(V1-V0)$, wobei gilt $\Delta T_{V0} - TAT_{gemessen}(t_{V0}) - TAT_{berechnet}(t_{V0})$.

8. Verfahren nach Anspruch 6 oder 7, **dadurch gekennzeichnet, dass** in der Verzögerungsphase des Luftfahrzeugs die berechnete Gesamttemperatur beträgt $TAT_{berechnet}(t) = SAT_{gemessen}(t) - \Delta T_{V2} * (t-t_{V2}) /T_{Konvergenz}$, wobei gilt $\Delta T_{V2} SAT_{gemessen}(t_{V2}) - TAT_{berechnet}(T_{V2})$.

9. Luftfahrzeug, **dadurch gekennzeichnet, dass** es ein System aufweist, das das Verfahren nach einem der vorhergehenden Ansprüche anwendet.

**Claims**

1. Method for determining the total temperature of the airflow surrounding an aircraft, **characterized in that** it comprises the following operations:

- measurement of a static temperature,
- measurement of a total temperature,
- determination of an airflow speed value,
- determination of a total temperature calculated from the measured static temperature and the measured total temperature, as a function of the airflow speed.

2. Method according to Claim 1, **characterized in that** the calculated total temperature corresponds to one of the following values, as a function of the airflow speed:

- the measured total temperature,
- the measured static temperature, or
- the measured total temperature or the measured static temperature, corrected according to a convergence law.

3. Method according to Claim 2, **characterized in that** the convergence law differs as a function of the air speed.

4. Method according to Claim 2 or 3, **characterized in that**, at low speed, the calculated total temperature corresponds to the measured static temperature.

5. Method according to any one of Claims 2 to 4, **characterized in that**, at high speed, the calculated total temperature corresponds to the measured total temperature.

6. Method according to any one of Claims 2 to 5, **characterized in that**, at intermediate speed, the calculated total temperature is corrected by a deviation between the measured total temperature and the measured static temperature at a given instant.

7. Method according to Claim 6, **characterized in that**, in an aircraft acceleration phase, the calculated total temperature is $TAT_{calculated}(t) = TAT_{measured}(t) - \Delta T_{vo} * (V1-CAS(t))/(V1-V0)$, in which $\Delta Tvo = TAT_{measured}(t_{vo}) - TAT_{calculated}(t_{vo})$.

8. Method according to Claim 6 or 7, **characterized in that**, in an aircraft deceleration phase, the calculated total temperature is $TAT_{calculated}(t) = SAT_{measured}(t) - \Delta T_{v2} * (t-t_{V2})/T_{convergence}$, in which $\Delta T_{v2} = SAT_{measured}(t_{v2}) - TAT_{calculated}(T_{v2})$.

9. Aircraft, **characterized in that** it comprises a system implementing the method according to any one of the preceding claims.

erreur TAT

-V2-    -V0-    -V1-

Vitesse air

# Fig. 1

| vitesses | accélération | décélération |
|---|---|---|
| <V2 | $TAT_{calculée}$ (t) = $SAT_{mesurée}$ (t) | $TAT_{calculée}$ (t) = $SAT_{mesurée}$ (t) $- \Delta T_{V2} * (t-t_{V2}) / T_{convergence}$ ou $TAT_{calculée}$ (t) = $SAT_{mesurée}$ (t) |
| de V2 à V0 | $TAT_{calculée}$ (t) = $SAT_{mesurée}$ (t) ou $\Delta T_{V0} = TAT_{mesurée}(t_{V0})$ $-TAT_{calculée}(t_{V0})$ | $TAT_{calculée}$ (t) = $TAT_{mesurée}$ (t) ou $\Delta T_{V2} = SAT_{mesurée}(t_{V2})$ $-TAT_{calculée}(t_{V2})$ |
| de V0 à V1 | $TAT_{calculée}$ (t) = $TAT_{mesurée}$ (t) $-\Delta T_{V0} *(V1-CAS(t)) / (V1-V0)$ | $TAT_{calculée}$ (t) = $TAT_{mesurée}$ (t) |
| >V1 | $TAT_{calculée}$ (t) = $TAT_{mesurée}$ (t) | $TAT_{calculée}$ (t) = $TAT_{mesurée}$ (t) |

# Fig. 2

**EP 1 991 847 B1**

## RÉFÉRENCES CITÉES DANS LA DESCRIPTION

**Documents brevets cités dans la description**

- EP 1275947 A2